# EUROPÄISCHE PATENTANMELDUNG

(11) **EP 1 382 469 A2**
(43) Veröffentlichungstag der Anmeldung: **21.01.2004**
(21) Anmeldenummer: 03016009.7
(22) Anmeldetag: 15.07.2003
(51) Int. Cl.: B60G 17/052

(54) **Magnetventil für Nutzfahrzeuge mit Luftfederung**

(30) Priorität: 18.07.2002 DE 10232554
(71) Anmelder: Haldex Brake Products GmbH, 69123 Heidelberg (DE)
(72) Erfinder: Blanz, Roland, 69253 Heiligkreuzsteinach (DE)
(74) Vertreter: Patentanwälte Rehberg + Hüppe

(57) **Zusammenfassung**

Ein Magnetventil für Nutzfahrzeuge mit Luftfederung weist mindestens zwei Anschlüsse, eine Spule (3) und einen in der Spule geführten Anker (4) auf, der mit einem Ventilkörper (9) verbunden ist, der über die Bewegung des Ankers (4) gegenüber mindestens einem dem Ventilkörper (9) zugeordneten Ventilsitz (8) steuerbar ist, wobei der Anker (4) entsprechend dem Durchmesser des Ventilsitzes (8) druckentlastet ausgebildet ist. Ein manuell betätigbarer Stößel (25) ist zum willkürlichen Betätigen des zwischen dem Ventilkörper (9) und dem Ventilsitz (8) gebildeten Ventils (8, 9) vorgesehen.

## Beschreibung

Die Erfindung bezieht sich auf ein Magnetventil für Nutzfahrzeuge mit Luftfederung, mit mindestens zwei Anschlüssen, einer Spule und einem in der Spule geführten Anker, der mit einem Ventilkörper verbunden ist, der über die Bewegung des Ankers gegenüber mindestens einem dem Ventilkörper zugeordneten Ventilsitz steuerbar ist, wobei der Anker entsprechend dem Durchmesser des Ventilsitzes druckentlastet ausgebildet ist.

Magnetventile der in Rede stehenden Art werden in Nutzfahrzeugen mit Luftfederung, insbesondere in Anhängefahrzeugen mit Luftfederung eingesetzt. Solche Anhängefahrzeuge verfügen üblicherweise über keine eigene elektrische Versorgung auf dem Anhängefahrzeug. Sie werden bei Kupplung mit einem Zugfahrzeug von dessen elektrischer Anlage mitversorgt. In abgekoppeltem Zustand eines Anhängefahrzeugs tritt ein Zustand auf dem Anhängefahrzeug ein, der einem Ausfall der elektrischen Anlage gleichkommt.

Ein Magnetventil der eingangs beschriebenen Art ist aus der DE 44 16 279 A1 bekannt. Dieses Magnetventil kann als 2/2-Wegeventil ausgebildet sein, so dass es in diesem Fall zwei Anschlüsse besitzt, wobei an den einen Anschluss ein Verbraucher angeschlossen ist, während der andere Anschluss mit einer Druckluftquelle bzw. einem Vorrat in Verbindung steht. Wenn das Magnetventil drei Anschlüsse besitzt, handelt es sich um ein 3/2-Wegeventil. Der dritte Anschluss stellt einen Entlüftungsanschluss dar. An einem 2/2-Wegeventil ist zwischen einem Ventilkörper und einem diesem zugeordneten Ventilsitz ein Einlassventil gebildet. Ein 3/2-Wegeventil weist zusätzlich noch ein Auslassventil auf, über welches in der Schließstellung der Entlüftungsanschluss abgeschlossen wird. In allen Fällen besitzt das Magnetventil eine Spule, die einen Innendurchmesser bildet oder in der ein Zylinder vorgesehen ist, in welchem ein stillstehender Kern einerseits und ein verschiebbar geführter Anker andererseits vorgesehen sind. Der verschiebbare Anker steht mit dem Ventilkörper des Magnetventils in Verbindung. Jede Bewegung des Ankers wird auf den Ventilkörper übertragen, so dass dieser relativ zum Ventilsitz einen Öffnungs- bzw. Schließvorgang auslöst. Bei Magnetventilen für Nutzfahrzeuge mit Luftfederung kommt es auf große Querschnitte an, d.h. es ist wichtig, dass über große Querschnitte relativ große Luftmengen in kurzer Zeit weitergeleitet werden können. Durch große Querschnitte entstehen große Wirkflächen, die von den Drücken beaufschlagt sind, so dass wiederum entsprechende Kräfte erforderlich sind, um die Ventilkörper zu bewegen. Mit der Baugröße eines Magnetventils steigt jedoch das Gewicht nicht unerheblich an, was insbesondere für den Fahrzeugbau nachteilig ist. Es ist deshalb sinnvoll, auch bei großquerschnittigen Magnetventilen für Nutzfahrzeuge mit Luftfederung die bekannte Druckentlastung anzuwenden. Hierzu wird der Anker entsprechend dem Durchmesser des Ventilsitzes druckentlastet ausgebildet, also mit gleich großen Wirkflächen versehen, wobei die an die Wirkflächen anschließenden Räume miteinander verbunden werden, damit auf gleichgroßen Wirkflächen gleichhohe Drücke zur Einwirkung kommen und damit die auf den Ventilkörper bzw. den Anker einwirkenden Kräfte sich gegenseitig aufheben. Die bekannten Magnetventile werden elektrisch angesteuert, d.h. zu ihrer Betätigung ist eine intakte elektrische Versorgung erforderlich. Der Ventilkörper bzw. der Anker ist darüber hinaus noch von einer mechanischen Feder in die Schließstellung beaufschlagt, so dass bei einem Ausfall der elektrischen Versorgung verlässlich die Schließstellung eingenommen wird. Dies gilt jedenfalls für das Einlassventil. Damit entsteht aber andererseits der Nachteil, dass bei einem z.B. vom Zugfahrzeug abgekuppelten und gelösten Anhängefahrzeug auch die elektrische Versorgung unterbrochen ist. Ein auf dem Anhängefahrzeug angeordnetes Magnetventil verbleibt damit in der Schließstellung und es ist nicht möglich, die Luftfederbälge mit weiterer Druckluft zu versorgen, um beispielsweise das Fahrgestell des Anhängefahrzeugs auf das Niveau einer Rampe zwecks Beladung anzuheben oder abzusenken.

Aus der DE 199 44 873 C1 ist eine Steueranlage zum Heben und Senken des Fahrzeugaufbaus von luftgefederten Fahrzeugen mit Niveauregelung bekannt. Ein Niveauregelventil ist an eine Druckluftquelle angeschlossen und steuert die mindestens einer Fahrzeugachse zugeordneten Luftfederbälge, um auf diese Art und Weise einen Sollabstand zwischen Fahrzeugaufbau und Fahrzeugachse durch das zugeordnete Niveauregelventil zu erreichen. Das Niveauregelventil besitzt einen Auslass zur Atmosphäre. Parallel zu einem Leitungszweig, der das Niveauregelventil aufweist, ist ein zweiter Leitungszweig zwischen der Druckluftquelle und den Luftfederbälgen vorgesehen, in welchem ein 3/2-Wegeventil und ein 2/2-Wegeventil, beide als Magnetventile ausgebildet, hintereinander angeordnet sind. Das 3/2-Wegeventil besitzt einen eigenen Entlüftungsanschluss. In einem oder beiden parallelen Leitungszweigen ist ein weiteres Magnetventil als Sperrventil angeordnet, das einerseits elektrisch über eine gemeinsame elektronische Steuereinrichtung und andererseits über eine mechanische Feder in zwei Stellungen schaltbar ist, wobei in der durch die Feder eingeschalteten Stellung der das Niveauregelventil aufweisende Leitungszweig freigeschaltet wird. Damit ist die Gewähr dafür gegeben, dass bei unterbrochener Spannungsversorgung eine automatische Betriebsbereitschaft in der Weise gegeben wird, dass ein Fahrbetrieb möglich ist. Nicht möglich ist es, einen abgestellten Anhänger auf das Niveau einer Rampe anzuheben oder abzusenken, um den Be- oder Entladungsvorgang zu ermöglichen. Dies ist nur in gekuppeltem Zustand mit dem Zugfahrzeug und bei ordnungsgemäßer elektrischer Versorgung möglich.

Der Erfindung liegt die Aufgabe zugrunde, ein Magnetventil der eingangs beschriebenen Art bereitzustellen, welches auch bei unterbrochener Spannungsversorgung ein willkürliches Heben und Senken des Fahrzeugaufbaus, z.B. zum Zwecke der Be- oder Entladung an einer Rampe, zu ermöglichen.

Erfindungsgemäß wird dies bei dem Magnetventil der eingangs beschriebenen Art dadurch erreicht, dass ein manuell betätigbarer Stößel zum willkürlichen Betätigen des zwischen dem Ventilkörper und dem Ventilsitz gebildeten Ventils vorgesehen ist.

Die Erfindung geht von dem Gedanken aus, dem in Verbindung mit Nutzfahrzeugen mit Luftfederung einzusetzenden Magnetventil einen manuell betätigbaren Stößel zu geben, der aus dem Gehäuse des Magnetventils dichtend herausgeführt sein kann. Der Stößel kann durch Drücken und/oder Ziehen aus einer Stellung, beispielsweise einer Ausgangslage, in eine andere Stellung verbracht werden, wobei er in dieser anderen Stellung z.B. das Einlassventil des an sich elektrisch ansteuerbaren Magnetventils in die Offenstellung überführt, so dass dann Druckluft in die Luftfederbälge einströmen kann, wodurch ein Hebevorgang des Fahrzeugaufbaus ausgelöst wird. Die auf diese Weise beschriebene Betätigung eines Einlass- oder Durchlassventils gilt für 3/2-Wegenventile wie auch für 2/2-Wegenventile. Bei 3/2-Wegeventilen muss mit der Bewegung des Stößels, die auf den Ventilkörper übertragen wird, mit dem Öffnen des Einlassventils gleichzeitig oder kurzzeitig verzögert auch das Schließen des Auslassventils erreichbar sein. Bei Ventilkombinationen aus einem 3/2-Wegeventil mit einem nachgeschalteten 2/2-Wegeventil kann durch gezielte manuelle Betätigung des letzteren Ventils ein Entlüftungsvorgang ausgelöst werden. Es ist auch möglich, zwei 2/2-Wegeventile einem 3/2-Wegeventil nachzuschalten, z. B. in Zuordnung zu den beiden Fahrzeugseiten. Die über die Stößel einnehmbaren Stellungen können verrastet ausgebildet sein, damit die jeweils eingestellte Stellung beibehalten wird, solange nicht die jeweils andere Stellung manuell herbeigeführt wird. Zur Beendigung eines Hebevorgangs muss dann wiederum die andere Stellung eingenommen werden. Entsprechendes gilt auch für einen Senkvorgang. Die Erfindung lässt sich an einem einzigen Magnetventil verwirklichen. Vorteilhaft kann sie aber auch an Magnetventilkombinationen aus mehreren Magnetventileinheiten angewendet werden, die entweder in einem gemeinsamen Gehäuse baulich vereinigt angeordnet sein können. Eine andere Realisierungsmöglichkeit besteht darin, einen modulhaften Aufbau zu verwirklichen und ein Magnetventil mit einem benachbarten Magnetventil zusammenzuschrauben oder aneinander anzuflanschen.

Besonders sinnvoll ist es, wenn dem Stößel eine Feder zugeordnet ist, die den Stößel in Schließrichtung des Ventils beaufschlagt. Diese Feder sorgt dafür, dass der Stößel nach einer willkürlichen manuellen Betätigung wiederum in seine Ausgangslage zurückgeführt wird, was nach dem Loslassen des Stößels geschieht. Damit wird insoweit ein Be- oder Entlüftungsvorgang beendet und es erfolgt eine automatische Rückeinstellung des Magnetventils oder der Einheit aus mehreren Magnetventilen in eine Ausgangsstellung, die den problemlosen weiteren Betrieb einer derart ausgestatteten Anlage ermöglicht, sobald die Spannungsversorgung wiederhergestellt ist. Insoweit erfolgt eine automatische Einstellung auf die Stellung "Fahrt".

Es ist aus mehreren Gründen sinnvoll, wenn der Stößel und der Ventilkörper als voneinander getrennte Bauteile am Magnetventil vorgesehen sind, die beim willkürlichen manuellen Betätigen des Stößels aneinander zur Anlage kommen. Damit ist sichergestellt, dass eine ordnungsgemäße Schließfunktion des Ventils durch die Führung des Stößels nicht beeinträchtigt wird und andererseits die den Stößel beaufschlagende Feder den Schließdruck des Ventilkörpers des Einlassventils nicht vergrößert. Der Stößel und der Ventilkörper sind als nahe beieinander angeordnete separate Bauteile im Gehäuse vorgesehen bzw. gelagert, so dass sie nach Durchfahren eines geringen Totweges unmittelbar aneinander zur Anlage kommen und so über die manuelle Betätigung des Stößels der Ventilkörper eines Einlass- oder Durchlassventils von dem zugehörigen Ventilsitz abhebt.

Sinnvoll ist es in diesem Zusammenhang, wenn zwischen Stößel und Ventilkörper ein elastisches Glied vorgesehen ist. Ein solches elastisches Glied kann beispielsweise durch eine zwischengeschaltete Platte aus elastomerem Material, aus einer aufgesetzten Dichtlippe oder einem elastischen Polsterkörper an der Spitze des Stößels realisiert sein. Die saubere Schließfunktion des Ventilkörpers wird damit nicht beeinträchtigt. Insbesondere wenn mehrere zusammengebaute Magnetventile gemeinsam betätigt werden, gestattet es das elastische Glied, Herstellungstoleranzen auszugleichen und so jedes der Ventile hinreichend zu betätigen.

In einer besonderen Ausführungsform sind mindestens zwei Einheiten, je aus Spule und Ventilkörper, in einem gemeinsamen Gehäuseblock angeordnet und es ist ein gemeinsames Betätigungselement für beide Stößel vorgesehen. Auch hier kann der gemeinsame Gehäuseblock aus einem durchgehenden Gehäuse oder aus zwei aneinander anschließenden Einzelgehäusen bestehen. Wichtig ist in diesem Zusammenhang die gemeinsame Betätigungsmöglichkeit beider Stößel der beiden Magnetventile durch nur ein einziges Betätigungselement. Hierdurch wird die Handhabung vereinfacht und sicherer gemacht. Fehlbedienungen können auf diese Art und Weise ausgeschlossen werden.

Für die Ausbildung des gemeinsamen Betätigungselementes ergeben sich verschiedene Möglichkeiten. So kann das Betätigungselement als axial verschiebbare Stange mit kegeligen Steuerflächen ausgebildet sein. Eine andere Möglichkeit besteht darin, dass das Betätigungselement als verdrehbare Stange mit Nockenflächen ausgebildet ist. Weitere konstruktive Ausgestaltungen sind ebenfalls möglich. Sinnvoll ist es, wenn das Betätigungselement, gleich in welcher Ausbildung, über eine Rückführfeder in Ausgangsstellung beaufschlagt ist. Diese Rückführfeder kann sinnvollerweise zusätzlich zu den einzelnen Federn vorgesehen sein, die die Stößel in die Ausgangsstellung, also entgegen der Öffnungsrichtung des Ventils beaufschlagen.

Die Erfindung gestattet es, die die Druckentlastung festlegenden Durchmesser bei Beibehaltung eines Gehäuses variabel veränderlich zu gestalten. Zu diesem Zweck ist ein Einsatz vorgesehen, der die die Druckentlastung festlegenden Durchmesser variabel bestimmt. Dabei wird die Konstruktion losgelöst von dem Durchmesser, über den der Anker in der Spule geführt ist, ausgebildet. Der Anker wird gleichsam unterteilt bzw. ein Teil des Ventilkörpers, z.B. in Form einer Ventilstange, ragt in den Anker hinein und ist mit diesem zugund druckfest verbunden. Die Druckentlastung wird durch den abgedichteten Durchmesser dieser Ventilstange, den Durchmesser des Ventilsitzes des Einlassventils und ggf. des Auslassventils bestimmt.

Die Erfindung wird anhand bevorzugter Ausführungsbeispiele weiter erläutert und beschrieben. Es zeigen:
- Fig. 1: einen Längsschnitt durch ein Magnetventil in der Ausbildung als 3/2-Wegenventil,
- Fig. 2: einen Schnitt durch ein Magnetventil in der Ausbildung als 2/2-Wegeventil,
- Fig. 3: eine schematisierte Darstellung einer Einheit aus zwei Magnetventilen in Hintereinanderanordnung,
- Fig. 4: eine ähnliche Ausführungsform wie Fig. 3, jedoch mit gemeinsamer manueller Betätigung über eine axial verschiebbare Stange,
- Fig. 5: eine weitere Ausführungsform mit gemeinsamer Betätigung zweier Magnetventile über eine gemeinsame verdrehbare Stange,
- Fig. 6: eine weitere Ausführungsform ähnlich der Darstellung gemäß Fig. 4 mit bevorzugter Ausgangsstellung der gemeinsamen axial verschiebbaren Stange, und
- Fig. 7: eine Ventilanordnung aus zwei Magnetventilen, bei der lediglich das nachgeschaltete 2/2-Wegeventil manuell und pneumatisch betätigbar ist.

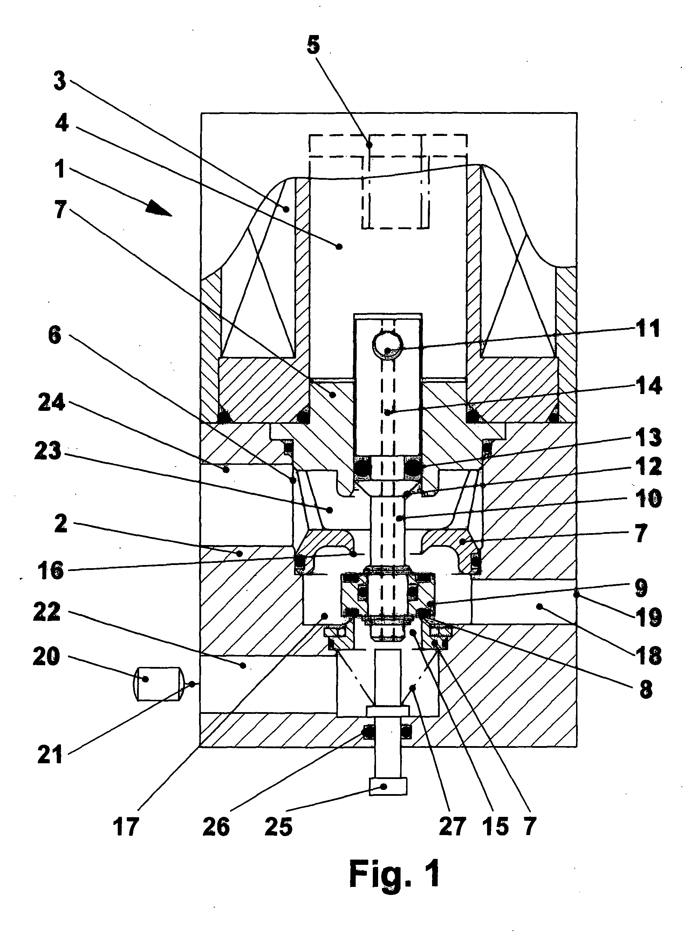

In **Fig. 1** ist ein Magnetventil 1 für Nutzfahrzeuge mit Luftfederung im Schnitt dargestellt. In einem gemeinsamen Gehäuse 2 ist eine Spule 3 vorgesehen, die einen inneren Durchmesser einschließt, in dem ein Anker 4 verschiebbar geführt ist. Der Anker 4 ist über eine Feder 5 in Schließrichtung des Ventils beaufschlagt.

Im Gehäuse 2 ist in einer gestuften Bohrung 6 ein Einsatz 7 untergebracht, der auch aus mehreren Teilen bestehen kann. Der Einsatz 7 ist in der dargestellten Weise in der Bohrung 6 abgedichtet gelagert. Er wird axial festgelegt durch die Spule 3 oder einen entsprechenden elektrischen Kopf des Magnetventils 1 gehalten. An dem Einsatz 7 ist über einen eingezogenen Rand 8 in Verbindung mit einem Ventilkörper 9 ein Einlassventil 8, 9 gebildet. Der Ventilkörper 9 besitzt eine Ventilstange 10, die sich nach oben in eine Ausnehmung bis in den Anker 4 hineinerstreckt. Beispielsweise durch einen Querstift 11 ist die Ventilstange 10 mit dem Anker 4 mechanisch verbunden. Die Ventilstange 10 kann auch als zweiter Teil des Ankers 4 angesehen werden. Die Ventilstange 10 besitzt eine Verdickung 12 mit einer Dichtung 13. Der Durchmesser der Dichtung 13 entspricht dem Durchmesser des Randes 8 des Einlassventils 8, 9. Die Ventilstange 10 ist mit Hilfe der Dichtung 13 abgedichtet in dem Einsatz 7 geführt. Der Ventilkörper 9 und die Ventilstange 10 sind von einer Axialbohrung 14 durchsetzt, die der Druckentlastung dient. Der Anker 4 ist ohnehin allseitig von Druckluft umspült, also druckentlastet untergebracht. In der Schließstellung wirkt auf die Einheit aus Ventilkörper 9 und Ventilstange 10 von oben auf die durch die Dichtung 13 begrenzte Wirkfläche der gleiche Druck wie auf die gleichgroße Fläche am Ventilkörper 9, die von der Seite einer Einströmkammer 15 beaufschlagt wird.

In der Ausbildung als 3/2-Wegeventil besitzt der Einsatz 7 bzw. ein Teil desselben einen eingezogenen Rand 16, der mit dem Ventilkörper 9 ein Auslassventil 9, 16 bildet. Zwischen dem Einlassventil 8, 9 und dem Auslassventil 9, 16 wird ein Verbraucherraum 17 gebildet, von dem ein Kanal 18 zu einem Anschluss 19 bzw. einer Leitung führt, die entweder direkt oder indirekt mit einem Luftfederbalg der Luftfeder in Verbindung steht. Die Einströmkammer 15 wird von einem Druckluftvorratsbehälter 20 über eine Leitung 21 mit Druckluft versorgt, die an einem Anschluss 22 am Gehäuse 2 des Magnetventils 1 angeschlossen ist und zu der Einströmkammer 15 führt. Zwischen dem Auslassventil 9, 16 und der Dichtung 13 ist eine Entlüftungskammer 23 gebildet, die über eine Durchbrechung 24 im Gehäuse 2 dauernd an die Atmosphäre angeschlossen ist.

Am Gehäuse 2 des Magnetventils 1 ist ein Stößel 25 begrenzt verschiebbar und über eine Dichtung 26 abgedichtet im Gehäuse gelagert. Der Stößel 25 stellt ein getrenntes Bauteil zu dem Ventilkörper 9 dar und endet zweckmäßig mit einem geringfügigen Abstand zu dem Ventilkörper 9, so dass dieser ohne negative Beeinflussung durch den Stößel 25 seine Schließstellung einnehmen kann. Es ist eine Feder 27 vorgesehen, die den Stößel 25 in die dargestellte Ausgangslage beaufschlagt bzw. zurückführt, in der der Stößel 25 außer Kontakt zu dem Ventilkörper 9 ist. Der Stößel 25 ragt mit seinem vorderen Ende in die Einströmkammer 15 ein. Der mögliche Hub des manuell betätigbaren Stößels 25 ist so bemessen, dass bei einem manuellen Verschieben in das Gehäuse 2 hinein zunächst das Einlassventil 8, 9 geöffnet und nachfolgend das Auslassventil 9, 16 geschlossen wird. Nach dem Loslassen des Stößels 25 kehrt dieser in seine in Fig. 1 dargestellte Ausgangslage zurück.

Mit einem solchen Magnetventil 1 ist folgende Betätigung möglich. Bei ordnungsgemäßer Spannungsversorgung wird das Magnetventil 1 über eine elektronische Steuereinrichtung geschaltet. In der Ausgangslage ist die Spule 3 spannungslos und das Einlassventil 8, 9 ist geschlossen. Damit ist der Anschluss 19 über die Durchbrechung 24 an die Atmosphäre angeschlossen. Sobald das Magnetventil 1 angesteuert wird und die Spule 3 unter Spannungsanschluss gerät, entsteht im Anker 4 eine nach oben gerichtete Kraft, so dass der Ventilkörper 9 über die Ventilstange 10 von dem eingezogenen Rand 8 abhebt. Das Einlassventil 8, 9 wird geöffnet und in der Folge das Auslassventil 9, 16 geschlossen. Damit gelangt Druckluft aus dem Druckluftvorratsbehälter 20 über das geöffnete Einlassventil 8, 9 zum Anschluss 19, beispielsweise zum Luftfederbalg oder einem nachgeordneten 2/2-Wegeventil. Sobald die Spannungsversorgung der Spule 3 unterbrochen wird, sorgt die Feder 5 dafür, dass der Anker 4, die Ventilstange 10 und der Ventilkörper 9 in die Schließstellung zurückkehren, so dass das Einlassventil 8, 9 geschlossen wird. Durch das vorangehende Öffnen des Auslassventils 9, 16 wird der Anschluss 19 über die Durchbrechung 24 mit der Atmosphäre verbunden. Diese spannungslose Stellung tritt auch dann auf einem Anhänger ein, wenn dessen Spannungsversorgung von dem Zugfahrzeug gelöst wird. Oft ist es aber dabei dann erforderlich, das Fahrgestell des Anhängers an die Höhe einer Rampe zur Durchführung eines Be- oder Entladevorgangs anzupassen, also anzuheben oder abzusenken. Anhand der Fig. 1 wird ein Anhebevorgang verdeutlicht. Zu diesem Zweck wird der Stößel 25 manuell in das Gehäuse 2 hineingedrückt, so dass das Einlassventil 8, 9 öffnet und das Auslassventil 9, 16 schließt. Solange der Stößel 25 gedrückt gehalten wird, gelangt Druckluft aus dem Druckluftvorratsbehälter 20 in die Luftfederbälge, so dass ein Hebevorgang des Fahrzeugaufbaus die Folge ist. Mit dem Loslassen des Stößels 25 wird dieser über die Feder 27 in die Ausgangslage wieder zurückgeführt, also das Einlassventil 8, 9 geschlossen und der Anschluss 19 wiederum an die Atmosphäre angeschlossen. Durch weitere Maßnahmen, beispielsweise die Nachschaltung eines 2/2-Wegeventils, wird die Entlüftung der Luftfederbälge in diesem Zustand verhindert.

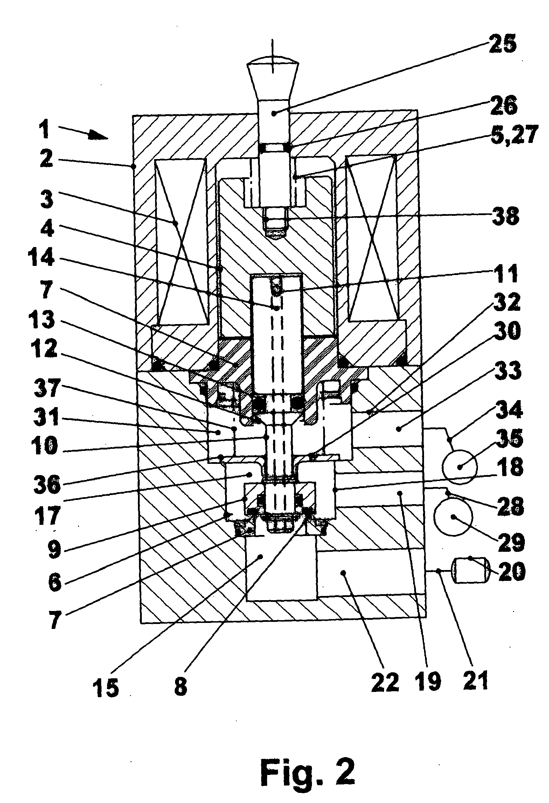

In **Fig. 2** ist ein Magnetventil 1 in der Ausbildung als 2/2-Wegeventil dargestellt. Dieses Magnetventil 1 kann als solches eingesetzt werden oder aber auch einem Magnetventil 1 gemäß Fig. 1 nachgeschaltet werden. Die Ausbildung dieses Magnetventils 1 gemäß Fig. 2 ähnelt in vielen Einzelheiten der Ausführungsform gemäß Fig. 1, weshalb auf die vorangehende Beschreibung verwiesen werden kann. Es fehlt hier ein eigener Entlüftungsanschluss und damit eine Durchbrechung 24 bzw. eine Entlüftungskammer 23. Es ist aber ein Einlassventil 8, 9 in der gleichen Weise verwirklicht wie bei der Ausführungsform der Fig. 1. Damit entsteht eine Verbraucherkammer 17, von deren Anschluss 19 eine Leitung 28 zu einem Luftfederbalg 29 bzw. Luftfederbälgen 29 einer ersten Achse geführt ist. Von dem Verbraucherraum 17 besteht Verbindung über eine Querdrossel 30 zu einem weiteren Verbraucherraum 31, von dem ein Kanal 32 zu einem Anschluss 33 führt. Am Anschluss 33 ist eine Leitung 34 angeschlossen, die zu einem Luftfederbalg 35 auf der anderen Seite der gleichen Achse führt. Die Querdrossel 30 kann im Rahmen einer Kunststoffplatte 36 als gezielt eingebrachte Drosselbohrung verwirklicht sein. Die Kunststoffplatte 36 muss nicht unbedingt abgedichtet im Gehäuse 2 angeordnet sein. Sie kann über eine Feder 37 in Anlage an einer Gehäusestufe gehalten sein. Auch hier entspricht der Durchmesser der Dichtung 13 dem Durchmesser des Randes 8. Beide Durchmesser können gemeinsam durch Austausch der beiden Teile des Einsatzes 7 gemeinsam variiert werden. Das Magnetventil 1 gemäß Fig. 2 ist an den Druckluftbehälter 20 angeschlossen, in der Regel über ein vorgeschaltetes Magnetventil 1 gemäß Fig. 1, wobei dann die Leitung 21 des Magnetventils 1 gemäß Fig. 2 an dem Anschluss 19 des Magnetventils 1 gemäß Fig. 1 angeschlossen ist.

Die Ausführungsform gemäß Fig. 2 weist die Besonderheit auf, dass der Stößel 25 auf der anderen Seite am Gehäuse 1 vorgesehen ist und das manuelle Öffnen des Einlassventils 8, 9 durch eine ziehende Bewegung an dem Stößel 25 herbeigeführt wird. Die Feder 5 erfüllt hier auch zugleich die Funktion der Feder 27. Beide Funktionen werden dabei von einer gemeinsamen Feder erreicht. Der Stößel 25 ist über ein Gewinde 38 mit dem Anker 4 verbunden.

Die Funktion des Magnetventils gemäß Fig. 2 ist aus den vorausgehenden Beschreibungen bereits erkennbar. Durch Ziehen des Stößels 25 wird das Einlassventil 8, 9 willkürlich manuell geöffnet, so dass Druckluft zu den Luftfederbälgen 29 und 35 strömen kann.

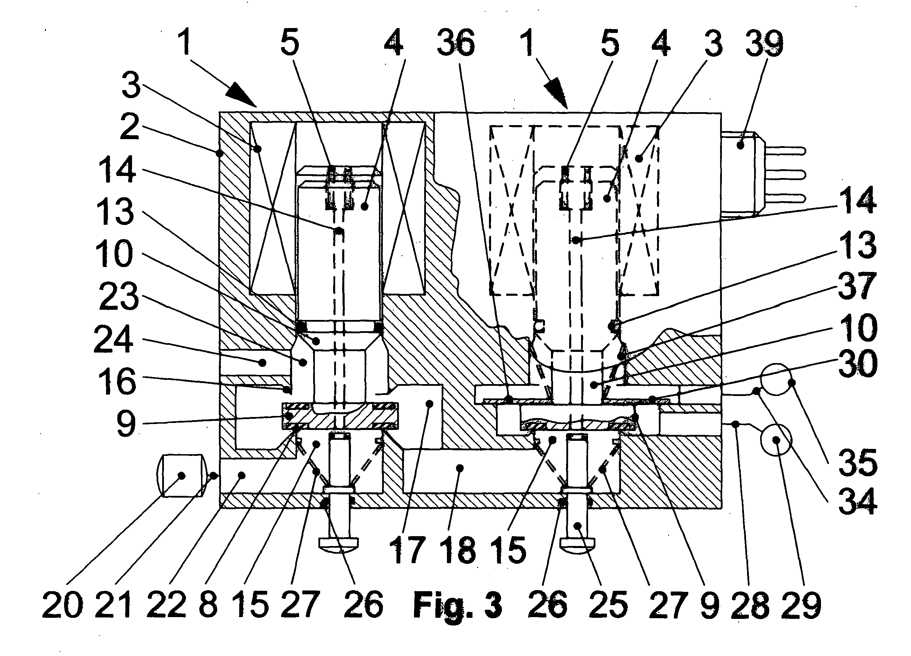

**Fig. 3** zeigt eine weitere Ausführungsform im Rahmen einer Ventilanordnung, bei der zwei Magnetventile 1 in einem schematisch dargestellten gemeinsamen Gehäuse 2 untergebracht sind. Das links dargestellte Magnetventil 1 ist als 3/2-Wegeventil ausgebildet, wie dies Fig. 1 zeigt. Das rechts dargestellte Magnetventil 1 ist als 2/2-Wegeventil ausgebildet, wie dies rein schematisch ähnlich Fig. 2 ausgebildet ist. Die beiden Stößel 25 der Magnetventile 1 sind hier auf der gleichen Seite unten angeordnet und werden gleichsinnig drückend manuell betätigt. Die Dichtungen 13 sind hier auf dem äußeren Umfang des Ankers 4 angeordnet. Der Durchmesser entspricht dem Durchmesser der eingezogenen Ränder 16 bzw. 8. Der Anker 4 erfüllt auch hier die Funktion der jeweiligen Ventilstange 10. Über einen Anschlussstecker 39 können beide Magnetventile 1 angesteuert werden. Die normale elektrische Ansteuerung der beiden Magnetventile 1 erfolgt in sinnfälliger Weise. Die manuelle Betätigung der jeweiligen Stößel 25 erfolgt wie folgt: Bei unterbrochener Spannungsversorgung, also beispielsweise abgekuppeltem Anhänger, befinden sich die Teile in der in Fig. 3 dargestellten Ausgangslage. Die Einlassventile 8, 9 sind geschlossen. Zum Belüften der Luftfederbälge 29 und 35 werden beide Stößel 25 an den Magnetventilen 1 gedrückt. Dadurch wird bei dem links dargestellten Magnetventil 1 das Einlassventil 8, 9 geöffnet und das Auslassventil 9, 16 geschlossen. Druckluft aus dem Druckluftvorratsbehälter 20 kann dabei vor das Einlassventil 8, 9 des zweiten Magnetventils 1 gelangen. Durch dessen gedrückten Stößel 25 ist das dortige Einlassventil 8, 9 ebenfalls geöffnet und die Kunststoffplatte 36 angehoben, so dass Druckluft über die Leitung 28 zu dem Luftfederbalg 29 und die Leitung 34 zu dem Luftfederbalg 35 strömen kann. Damit wird ein Anhebevorgang des Fahrgestells eingeleitet und ausgelöst, der solange andauert, wie die beiden Stößel 25 gemeinsam eingedrückt gehalten werden. Nach dem Loslassen der beiden Stößel 25 kehren diese infolge der Kraft der Federn 27 in die dargestellte Ausgangslage zurück, d.h. die beiden Einlassventile 8, 9 der beiden Magnetventile 1 werden geschlossen.

Soll ein Entlüftungsvorgang eingeleitet werden, um beispielsweise das Fahrgestell an die Höhe einer Rampe abzusenken, dann wird lediglich der Stößel 25 des rechts dargestellten Magnetventils 1 in der Ausbildung als 2/2-Wegeventil eingedrückt und eingedrückt gehalten. Dabei öffnet dessen Einlassventil 8, 9, so dass Druckluft aus den Luftfederbälgen 29 und 35 nach rückwärts durch den Kanal 18 und die Durchbrechung 24 in die Atmosphäre abströmen kann. Das Einlassventil 8, 9 des Magnetventils 1, welches links angeordnet ist, verbleibt durch den nicht betätigten Stößel 25 in der Schließstellung. Der Entlüftungsvorgang wird durch Loslassen des Stößels 25 beendet. Damit wird gleichzeitig automatisch die Ausgangslage eingestellt, d.h. nach dem Ankuppeln des Anhängefahrzeugs an das Motorfahrzeug und die Herstellung der elektrischen Verbindung werden die zusammengefassten Magnetventile über die elektronische Einrichtung so gesteuert, wie es der Fahrstellung entspricht.

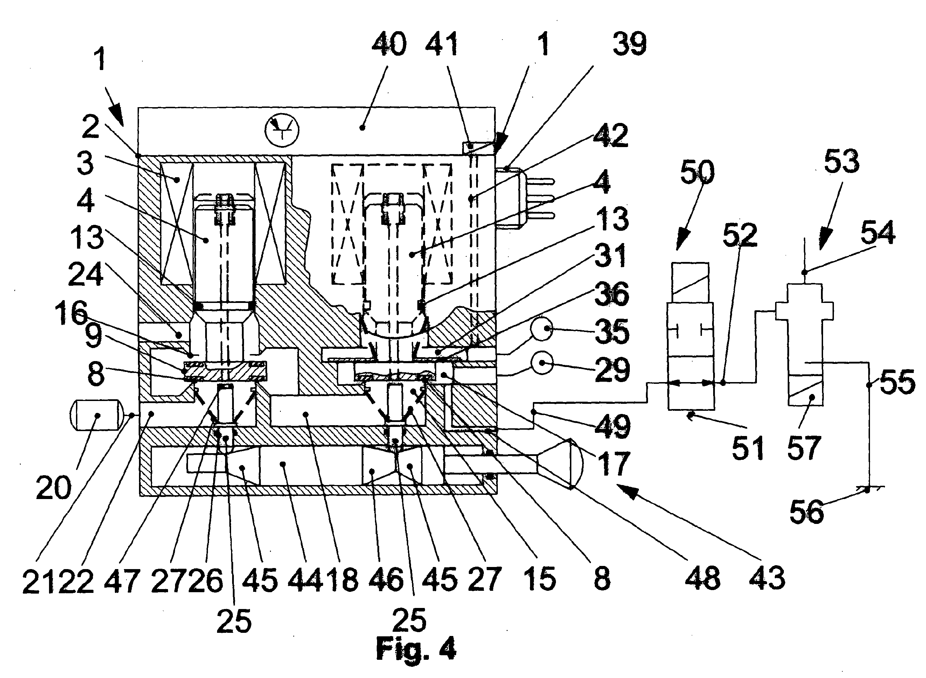

**Fig. 4** zeigt eine weitere Ausführungsmöglichkeit einer Ventilanordnung aus zwei Magnetventilen 1, die ganz ähnlich aufgebaut sind wie die Ausführungsform gemäß Fig. 3, weshalb auf deren Beschreibung verwiesen werden kann. Am Gehäuse 2 ist eine gemeinsame elektronische Steuereinrichtung 40 angeordnet, die zum Ansteuern der beiden Magnetventile ausgebildet und eingerichtet ist. Die Steuereinrichtung 40 weist zusätzlich einen Drucksensor 41 auf, der über eine Leitung 42 mit dem Verbraucherraum 31 bzw. dem Luftfederbalg 35 in Verbindung steht, so dass das elektrische Signal des Drucksensors 41 von der Steuereinrichtung 40 mitverarbeitet bzw. -berücksichtigt werden kann. Jedes der beiden Magnetventile besitzt wiederum einen Stößel 25. Zur gemeinsamen Betätigung der Stößel 25 ist ein Betätigungselement 43 vorgesehen, welches hier als axial verschiebbare Stange 44 ausgebildet und mit kegeligen Steuerflächen 45, 46 versehen ist. Es ist erkennbar, dass dem Ventilstößel 25 des rechts dargestellten Magnetventils 1 die beiden Steuerflächen 45 und 46 zugeordnet sind, während der Stößel 25 des links dargestellten Magnetventils 1 nur in Verbindung mit einer kegeligen Steuerfläche 45 arbeitet. Damit werden beide Stößel 25 beim Eindrücken der verschiebbaren Stange 44 gemeinsam eingedrückt, während beim Ziehen der Stange 44 lediglich der Stößel 25 des rechts dargestellten Magnetventils 1 eingedrückt wird. Dies entspricht damit einer sinnfälligen und zwangsgekoppelten Betätigung der beiden Stößel 25, wie sie anhand von Fig. 3 beschrieben wurde.

Der Stößel 25 des links dargestellten Magnetventils 1 weist an seiner dem Ventilkörper 9 zugekehrten Spitze ein elastisches Glied 47 auf, das aus einer aufgelegten Dichtungslippe, einem Kunststoffpolster o.dgl. bestehen kann. Solche elastischen Glieder 27 können an den Stößeln 25 generell vorgesehen sein. Besonders sinnvoll ist diese Ausbildung, wenn zwei Stößel 25 über ein gemeinsames Betätigungselement 43 betätigt werden und dabei Toleranzen der kegeligen Steuerflächen 45 und/oder der Stößel 25 ausgeglichen werden sollen.

Bei der Ausführungsform gemäß Fig. 4 führt von dem Verbraucherraum 17, der Verbindung zu den beiden Luftfederbälgen 29 und 35 hat, ein Kanal 48 über eine dort angeschlossene Leitung 49 zu einem weiteren Magnetventil 50, das über eine hier nicht dargestellte elektrische Leitung auch von der Steuereinrichtung 40 angesteuert wird. Das Magnetventil 50 weist zwei Stellungen auf, nämlich eine Durchgangsstellung und eine abgesperrte Stellung. Es ist eine Feder 51 vorgesehen, die bestrebt ist, die Durchgangsstellung einzustellen, so dass das Magnetventil 50 bei Ausfall einer Spannungsversorgung die Durchgangsstellung einnimmt. An das Magnetventil 50 ist über eine Leitung 52 ein Niveauregelventil 53 angeschlossen, welches über eine Leitung 54 mit Druckluft versorgt wird. Das Niveauregelventil 53 hat über einen Taster 55 Verbindung zur Fahrzeugachse 56. Das Niveauregelventil 53 kann einen Wegsensor 57 aufweisen, von dem eine nicht dargestellte elektrische Leitung zu der Steuereinrichtung 40 führt, so dass diese mit Signalen betreffend die Höhe des Fahrzeugaufbaus über der Fahrzeugachse versorgt werden kann.

Die Ventileinheit aus den beiden Magnetventilen 1 gestattet zunächst einmal die manuelle Betätigung der beiden Magnetventile 1 bei Ausfall der Spannungsversorgung. Durch das in der Anlage vorgesehene Niveauregelventil 53 und das zusätzliche Magnetventil 50 wird die Fahrbereitschaft eines Anhängers auch dann gewährleistet, wenn die Spannungsversorgung auf dem Anhänger und/oder auf dem Zugfahrzeug für das Anhängefahrzeug ausgefallen ist. Damit ist eine Rückfahrt nach eingetretenem Defekt zum Kunden bzw. in die Werkstatt möglich.

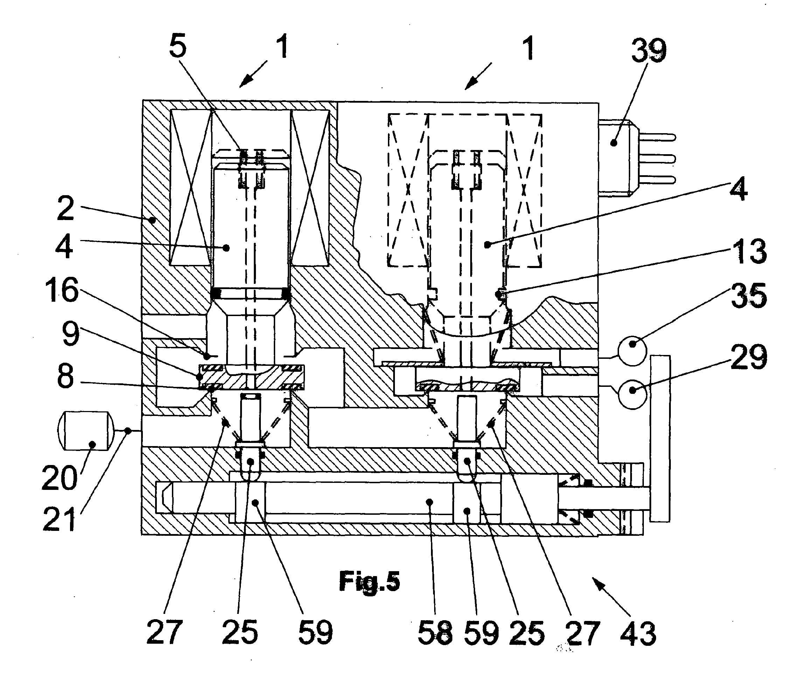

Die in **Fig. 5** dargestellte Ausführungsform baut auf der Ausgestaltung der beiden Magnetventile 1 auf, wie sie anhand von Fig. 4 bereits beschrieben wurde. Das gemeinsame Betätigungselement 43 ist hier als verdrehbare Stange 58 ausgebildet und mit Nockenflächen 59 versehen. Es versteht sich, dass die beiden Nockenflächen 59 wiederum in dem Sinne unterschiedlich ausgebildet sein müssen, dass beispielsweise beim Drehen in der einen Verdrehrichtung beide Stößel 25 betätigt werden, während beim Drehen in der anderen Richtung nur der Stößel 25 des rechts dargestellten Magnetventils betätigt wird.

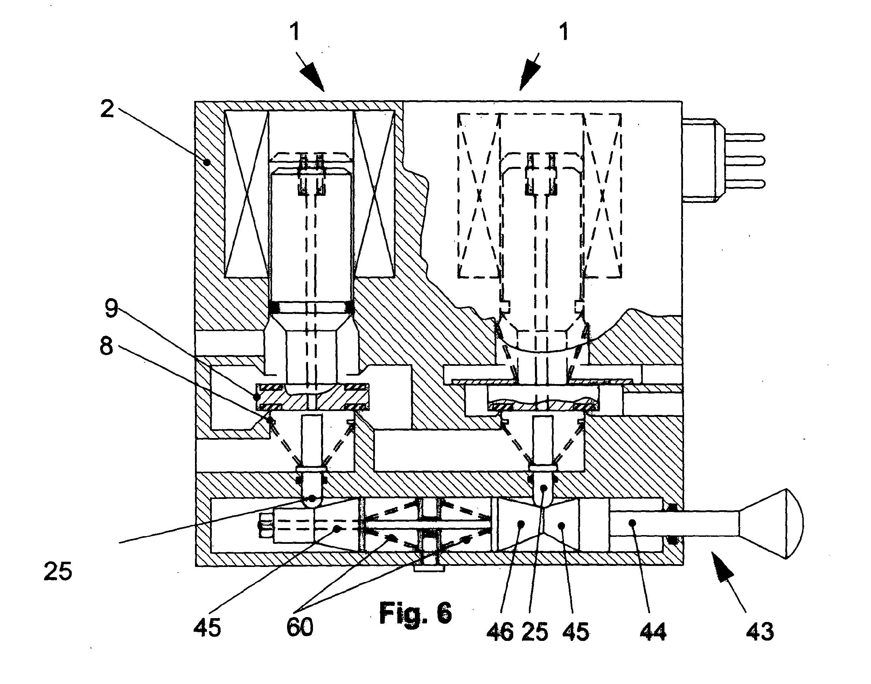

Die Ausführungsform gemäß **Fig. 6** schließt an die Bauart gemäß Fig. 4 an, d.h. auch hier ist das Betätigungselement 43 als axial verschiebbare Stange 44 ausgebildet. Die kegeligen Steuerflächen 45 und 46 sind entsprechend verteilt angeordnet. Die Stange 44 wird in eine mittlere Ausgangsstellung durch eine oder mehrere Federn 60 beaufschlagt, die gehäuseseitig abgestützt sind. Eine solche mittlere Ausgangsstellung kann auch bei der Ausbildung als verdrehbare Stange 58 verwirklicht werden, beispielsweise durch die Anordnung einer Wickelfeder o.dgl.. Damit ist sichergestellt, dass das gemeinsame Betätigungselement 43 nach dem Loslassen in eine mittlere Ausgangsstellung zurückkehrt, in der die Stößel 25 sich in der nicht betätigten Ausgangsstellung befinden, so dass die Einlassventile 8, 9 geschlossen sind und bei ordnungsgemäßer Spannungsversorgung die Magnetventile 1 ordnungsgemäß geschaltet werden können.

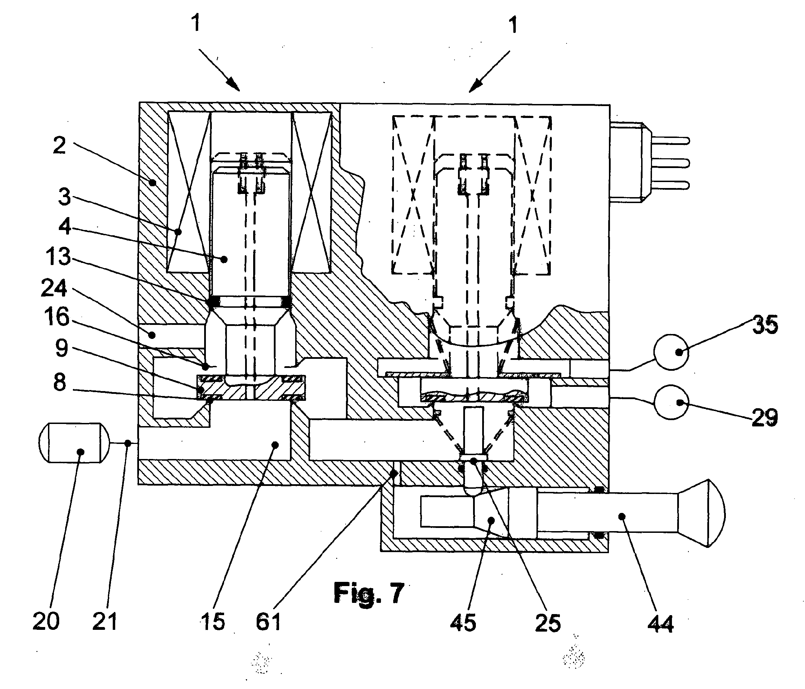

**Fig. 7** zeigt schließlich eine Ausführungsform, bei der das links dargestellte Magnetventil 1 ohne Stößel 25 ausgebildet ist. Lediglich das rechts dargestellte Magnetventil 1 in der Ausführung als 2/2-Wegeventil besitzt hier einen Stößel 25, dem eine verschiebbare Stange 44 mit kegeliger Steuerfläche 45 zugeordnet ist. Die Stange 44 ist hier manuell drückbar vorgesehen, um eine völlige Entlüftung der Luftfederbälge 29 und 35 gezielt zu erreichen, wie dies bei einem Fährentransport oder Bahntransport o.dgl. erforderlich ist. Es ist eine pneumatische Rückstellung der Stange 44 über einen Kanal 61 vorgesehen, so dass die Stange 44 auch dann in ihre Ausgangslage zurückgeführt wird, wenn eine Rückstellung nach dem völligen Entlüften der Luftfederbälge 29 und 35 vergessen wird. Dies bezieht sich auf einen funktionsfähigen elektronischen Betrieb, also bei ordnungsgemäßer Spannungsversorgung.

### BEZUGSZEICHENLISTE

- 1 -: Magnetventil
- 2 -: Gehäuse
- 3 -: Spule
- 4 -: Anker
- 5 -: Feder
- 6 -: Bohrung
- 7 -: Einsatz
- 8 -: Rand
- 9 -: Ventilkörper
- 10 -: Ventilstange

- 11 -: Querstift
- 12 -: Verdickung
- 13 -: Dichtung
- 14 -: Axialbohrung
- 15 -: Einströmkammer
- 16 -: Rand
- 17 -: Verbraucherraum
- 18 -: Kanal
- 19 -: Anschluss
- 20 -: Druckluftvorratsbehälter

- 21 -: Leitung
- 22 -: Anschluss
- 23 -: Entlüftungskammer
- 24 -: Durchbrechung
- 25 -: Stößel
- 26 -: Dichtung
- 27 -: Feder
- 28 -: Leitung
- 29 -: Luftfederbalg
- 30 -: Querdrossel

- 31 -: Verbraucherraum
- 32 -: Kanal
- 33 -: Anschluss
- 34 -: Leitung
- 35 -: Luftfederbalg
- 36 -: Kunststoffplatte
- 37 -: Feder
- 38 -: Gewinde
- 39 -: Anschlussstecker
- 40 -: Steuereinrichtung

- 41 -: Drucksensor
- 42 -: Leitung
- 43 -: Betätigungselement
- 44 -: verschiebbare Stange
- 45 -: kegelige Steuerfläche
- 46 -: kegelige Steuerfläche
- 47 -: elastisches Glied
- 48 -: Kanal
- 49 -: Leitung
- 50 -: Magnetventil

- 51 -: Feder
- 52 -: Leitung
- 53 -: Niveauregelventil
- 54 -: Leitung
- 55 -: Taster
- 56 -: Fahrzeugachse
- 57 -: Wegsensor
- 58 -: verdrehbare Stange
- 59 -: Nockenfläche
- 60 -: Feder
- 61 -: Kanal

## Patentansprüche

1. Magnetventil für Nutzfahrzeuge mit Luftfederung, mit mindestens zwei Anschlüssen, einer Spule (3) und einem in der Spule geführten Anker (4), der mit einem Ventilkörper (9) verbunden ist, der über die Bewegung des Ankers (4) gegenüber mindestens einem dem Ventilkörper (9) zugeordneten Ventilsitz (8) steuerbar ist, wobei der Anker (4) entsprechend dem Durchmesser des Ventilsitzes (8) druckentlastet ausgebildet ist, **dadurch gekennzeichnet, dass** ein manuell betätigbarer Stößel (25) zum willkürlichen Betätigen des zwischen dem Ventilkörper (9) und dem Ventilsitz (8) gebildeten Ventils (8, 9) vorgesehen ist.

2. Magnetventil nach Anspruch 1, **dadurch gekennzeichnet, dass** dem Stößel (25) eine Feder (27) zugeordnet ist, die den Stößel (25) in Schließrichtung des Ventils (8, 9) beaufschlagt.

3. Magnetventil nach Anspruch 1 oder 2, **dadurch gekennzeichnet, dass** der Stößel (25) und der Ventilkörper (9) als voneinander getrennte Bauteile am Magnetventil (1) vorgesehen sind, die beim willkürlichen manuellen Betätigen des Stößels (25) aneinander zur Anlage kommen.

4. Magnetventil nach Anspruch 3, **dadurch gekennzeichnet, dass** zwischen Stößel (25) und Ventilkörper (9) ein elastisches Glied (47) vorgesehen ist.

5. Magnetventil nach einem oder mehreren der Ansprüche 1-4, **dadurch gekennzeichnet, dass** mindestens zwei Einheiten, je aus Spule (3) und Ventilkörper (9), in einem gemeinsamen Gehäuseblock (2) angeordnet sind und ein gemeinsames Betätigungselement (43) für beide Stößel (25) vorgesehen ist.

6. Magnetventil nach Anspruch 5, **dadurch gekennzeichnet, dass** das Betätigungselement (43) als axial verschiebbare Stange (44) mit kegeligen Steuerflächen (45) ausgebildet ist.

7. Magnetventil nach Anspruch 5, **dadurch gekennzeichnet, dass** das Betätigungselement (43) als verdrehbare Stange (58) mit Nockenflächen (59) ausgebildet ist.

8. Magnetventil nach Anspruch 6 oder 7, **dadurch gekennzeichnet, dass** das Betätigungselement (43) über eine Rückführfeder (60) in Ausgangsstellung beaufschlagt ist.

9. Magnetventil nach einem oder mehreren der Ansprüche 1-8, **dadurch gekennzeichnet, dass** die die Druckentlastung festlegenden Durchmesser bei Beibehaltung eines Gehäuses variabel veränderlich gestaltet sind.

10. Magnetventil nach Anspruch 9, **dadurch gekennzeichnet, dass** ein Einsatz (7) vorgesehen ist, der die die Druckentlastung festlegenden Durchmesser variabel bestimmt.
